Europäisches Patentamt

European Patent Office

Office européen des brevets

(11) Numéro de publication: **0 267 990**
**A1**

## (12) DEMANDE DE BREVET EUROPEEN

(21) Numéro de dépôt: **86202043.5**

(22) Date de dépôt: **19.11.86**

(51) Int. Cl.⁴: **B60L 11/04** , B60K 41/08 , B62D 11/04

(43) Date de publication de la demande:
**25.05.88 Bulletin 88/21**

(84) Etats contractants désignés:
**AT BE CH DE FR GB IT LI LU NL SE**

(71) Demandeur: **ACEC, Société Anonyme**
**Avenue Lloyd George 7**
**B-1050 Bruxelles(BE)**

(72) Inventeur: **Monfils P.**
**Rue Cortil Stiennon 6**
**B-5090 Heron(BE)**
Inventeur: **Defosse, Georges**
**Rue de Heuseux 46**
**B-4511 Barchon(BE)**

(54) Dispositif de regulation d'un vehicule a transmission electrique.

(57) On décrit un dispositif de régulation adaptable à un véhicule à transmission électrique comportant un groupe électrogène (30) éventuellement piloté par une excitatrice (33) et des moteurs électriques qui actionnent par l'intermédiaire de réducteurs de vitesse des roues ou barbotins entraînant des chenilles, caractérisé en ce qu'il comporte au moins un organe (35) pour la mesure de la vitesse de rotation du moteur thermique (31), des circuits (34,36) transformant le signal provenant dudit organe pour la mesure de la vitesse de rotation du moteur thermique en un signal proportionnel, et un circuit comparateur (37) qui compare ledit signal à un signal de référence et agit, en fonction de la position de l'accélérateur du poste de conduite (36), sur l'excitation (33) de la génératrice (32).

Fig.2

# DISPOSITIF DE RÉGULATION D'UN VÉHICULE À TRANSMISSION ÉLECTRIQUE

L'invention concerne un dispositif de régulation d'un véhicule éventuellement chenillé à transmission électrique comportant un groupe électrogène éventuellement piloté par une excitatrice, et des moteurs électriques qui actionnent, par l'intermédiaire de réducteurs de vitesse, des roues ou des barbotins entraînant les chenilles.

Le brevet CH 369 161 décrit un véhicule chenillé à transmission électrique dans lequel la pédale d'accélérateur actionne un dispositif pneumatique ou hydraulique qui par l'intermédiaire d'une membrane flexible commande à la fois la vitesse de rotation du groupe électrogène et le courant d'excitation de la génératrice est tributaire de la déformation de la membrane, due à la dépression créée par le ventilateur de la génératrice et, comme ladite membrane flexible ne réagit qu'à partir du moment où le moteur diesel a pratiquement atteint une nouvelle vitesse de consigne, il en résulte un manque de synchronisation entre la commande de la vitesse de rotation du groupe électrogène et la commande de l'excitation de la génératrice. Ce manque de synchronisation se traduit par un retard entre la commande et la réponse des moteurs électriques. Ce retard est encore aggravé par l'inertie propre du groupe électrogène pour atteindre un retard incompatible avec certaines applications du véhicule chenillé. De plus, dans ce dispositif, la commande agit sur le courant d'excitation de la génératrice et impose l'utilisation d'un schéma électrique constitué d'éléments susceptibles de fonctionner sous des courants assez importants.

Un but de la présente invention vise à fournir un dispositif de régulation qui supprime les inconvénients précités et maintient le groupe électrogène dans des conditions de fonctionnement optimales, plus particulièrement une vitesse proche de la vitesse correspondant à la puissance maximum développée par le moteur thermique quelle que soit la résistance à l'avancement opposée audit véhicule.

Un autre but de la présente invention vise à fournir un dispositif de régulation d'un véhicule à transmission électrique qui décharge le chauffeur des préoccupations concernant le réglage de paramètres électriques tel que le réglage de rhéostats, la manipulation d'interrupteurs et de leviers de commande de vitesse.

Un autre but de la présente invention vise à fournir un dispositif de régulation d'un véhicule à transmission électrique, notamment d'un véhicule chenillé, grâce auquel les conditions de fonctionnement du moteur thermique sont optimales au vu des exigeances posées par le conducteur à l'aide d'une pédale d'accélération. Le dispositif de régulation doit, plus particulièrement, permettre au conducteur de disposer à tout moment et instamment de la puissance maximale disponible dans les conditions d'utilisation les plus diverses.

Un inconvénient du dispositif de régulation connu consiste en ce que, par exemple lors de la montée d'une côte, le moteur thermique ayant déjà atteint sa puissance maximale, le couple résistant augmente encore, le moteur thermique va réduire sa vitesse de rotation à une vitesse inférieure qui à son tour correspond à un couple-moteur plus faible et il en résulte que le moteur thermique va caler.

Un but de la présente invention vise à fournir un dispositif de régulation d'un véhicule à transmission électrique qui empêche un tel fonctionnement et qui permet de gravir une côte ou un obstacle à une vitesse plus lente, mais avec un couple optimal à la sortie du moteur thermique.

Les buts de la présente invention sont atteints par un dispositif de régulation du type susmentionné caractérisé en ce qu'il comporte au moins un organe pour la mesure de la vitesse de rotation du moteur thermique, des circuits transformant le signal provenant dudit organe pour la mesure de la vitesse de rotation du moteur thermique en un signal proportionnel, et un circuit comparateur qui compare ledit signal à un signal de référence et agit, en fonction de la position de l'accélérateur du poste de conduite, sur l'excitation de la génératrice.

Vu la rapidité de réponse et l'action sur l'excitation de la génératrice, les inconvénients du dispositif de régulation connu sont évités. En effet, si, lorsque le moteur est déjà à sa puissance maximale, le couple résistant augmente encore, sa vitesse de rotation va diminuer. L'organe de mesure détecte cette diminution grâce aux circuits susmentionnés qui permettent d'agir sur l'excitation de la génératrice entrainée par le moteur thermique en diminuant cette excitation. De ce fait, la puissance demandée au moteur thermique est abaissée et celui-ci peut au moins maintenir sa vitesse de rotation optimale.

Avantageusement, l'organe de mesure de la vitesse de rotation du moteur thermique est un capteur tachymétrique fournissant des impulsions.

De préférence, les circuits transformant le signal provenant du capteur tachymétrique consistant en un circuit de mise en forme qui transforme le signal reçu en un signal sinusoïdal, un convertisseur qui transforme le signal sinusoïdal en un signal de tension continue proportionnelle à la fréquence d'entrée.

De manière analogue, le circuit comparateur consiste en un régulateur du type proportionnel intégrateur et dérivateur permettant la comparaison à un signal de référence.

De préférence, le circuit comparateur est relié, via une résistance à curseur dite résistance d'accélérateur et par l'intermédiaire d'un amplificateur à l'excitation d'une excitatrice de la génératrice, qui est montée sur le même arbre que celle-ci.

Selon une forme d'exécution particulièrement préferée, le dispositif de régulation comporte, entre le circuit comparateur et l'amplificateur, une réistance enclenchable et déclenchable. Celle-ci permet d'agir sur l'excitation de la génératrice, notamment au démarrage.

Selon la présente invention, le dispositif de régulation peut encore comporter d'autres modules qui assurent respectivement, en fonction de la vitesse du véhicule, l'insertion d'une résistance de dérivation aux bornes de l'enroulement d'excitation des moteurs électriques en vue d'augmenter la vitesse, la protection en survitesse, la surexcitation de la génératrice au démarrage et l'autorisation du changement des rapports de vitesse du ou des réducteurs, ainsi que des protections diverses.

Avantageusement, le dispositif de régulation comporte un module pour l'assistance en virage qui comporte des capteurs de vitesse placés en bout d'arbre des moteurs électriques d'entraînement gauche et droit, et des circuits de transformation des signaux provenant de chaque capteur de vitesse, qui sont reliés à un circuit en liaison avec l'excitation de la génératrice et court-circuite l'inducteur de moteur voulu et/ou freine celui-ci par l'intermédiaire d'organes de commande adéquats.

Le dispositif de régulation selon la présente invention peut également comporter un module qui commande l'insertion d'une résistance de dérivation sur les inducteurs des moteurs d'entraînement via des relais, ledit module comportant un circuit comparateur du signal provenant des capteurs de vitesse desdits moteurs à un signal de référence.

Le dispositif de régulation peut encore comporter un module de surexcitation commandant l'enclenchement et le déclenchement de la résistance de dérivation entre le circuit comparateur et l'amplificateur du courant d'excitation de la génératrice, via un relai, en fonction du signal provenant des capteurs de vitesse montés sur les moteurs d'entraînement en vue d'obtenir une excitation plus grande au démarrage.

Avantageusement, le dispositif de régulation selon la présente invention comporte encore un module de commutation de la séquence de changement du rapport de vitesse des réducteurs associés aux moteurs électriques d'entraînement. Celui-ci comporte une porte autorisant le commutation ordonnée par le conducteur en fonction de la vitesse des moteurs d'entraînement, un élément commandant via des électrovannes ladite commutation et un élément commandant l'enclenchement et le déclenchement de l'excitation de la génératrice via un relais.

Selon l'invention, le dispositif de régulation comporte encore un module de protection comportant un comparateur de la vitesse de rotation des moteurs électriques d'entraînement à une valeur de référence et un circuit de commande, en fonction de ces vitesses, de l'interruption de l'excitation, via un relais.

D'autres détails apparaîtront plus clairement à la lecture de la description d'une forme d'exécution particulière illustrée par les dessins dans lesquels :

-la figure 1 représente un véhicule chenillé équipé du dispositif de régulation selon la présente invention;

-la figure 2 représente une forme d'exécution du dispositif de régulation;

-la figure 3 représente une autre forme d'exécution du dispositif de régulation.

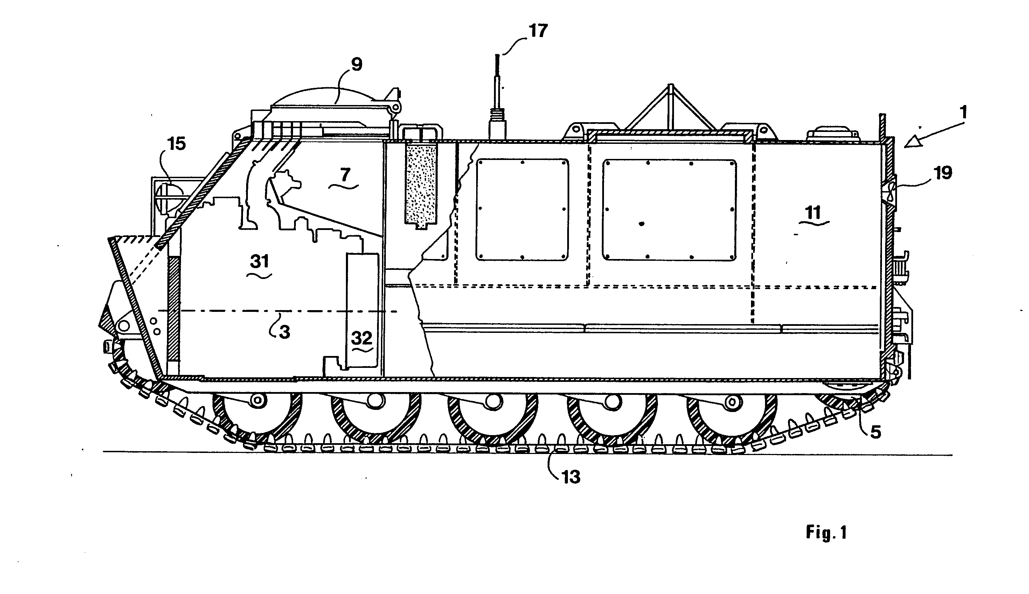

À la figure 1, on a représenté, selon une vue en coupe partielle, un véhicule chenillé. Il est bien entendu que le dispositif de régulation décrit qui s'y rapporte ne se limite pas à la commande de ce type de véhicules uniquement, celui-ci étant donné purement à titre d'exemple non limitatif.

Le véhicule comporte un châssis connu en soi 1 dans lequel sont logés, à l'avant, un moteur thermique, en l'occurence un moteur à combustion interne tel qu'un moteur diesel 31 et une génératrice 32, de préférence un alternateur dont la tension est redressée, monté sur l'arbre, moteur 3 et une génératrice (non représentée) servant d'exciter à la génératrice 32. La puissance électrique fournie par la génératrice 32 est transmise par des câbles (non représentés) aux moteurs électriques d'entraînement, de préférence des moteurs électriques à courant continus logés dans les barbotins arrières gauche (5) et droit du véhicule.

Le véhicule comporte également un poste de conduite 7 accessible par une chambre arrière 11. On y a également représenté d'autres organes tels que les chenilles 13, des accessoires tels que moyens d'éclairage 15 et antennes de réception 17. Le véhicule est également équipé d'un moyen de propulsion dans l'eau tel qu'une hélice 19.

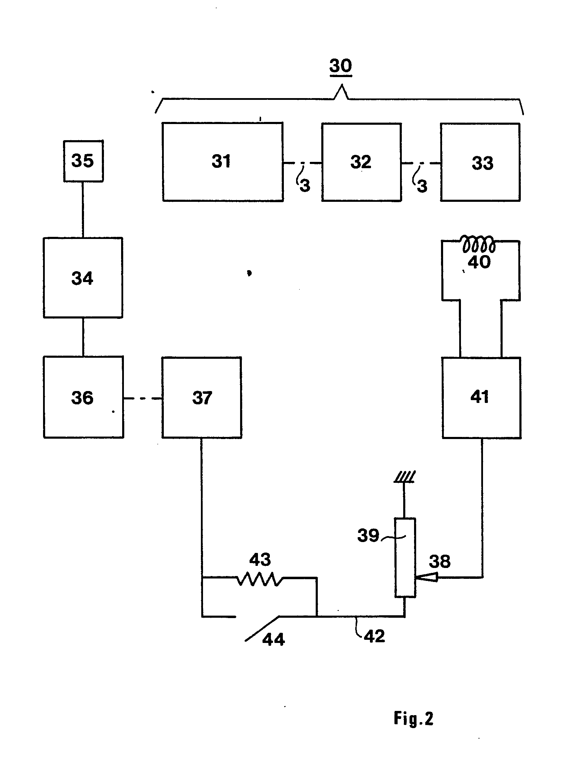

Le dispositif de régulation est constitué d'un premier module de régulation, montré en figure 2 et composé d'éléments dont la fonction est de conserver au moteur thermique une vitesse pratiquement constante quelle que soit la résistance opposée à l'avancement du véhicule chenillé. La figure 2 montre un groupe électrogène 30 composé d'un moteur thermique 31 entraînant un alternateur 32 et une excitatrice 33. Dans ce premier module de régulation, un circuit de mise en forme 34 transforme un signal sinusoïdal fourni par un capteur tachymétrique 35, mesurant la vitesse de rotation du moteur thermique 31 du groupe électrogène 30, en impulsions envoyées à un convertisseur 36 qui, à son tour, transforme le signal de fréquence en un signal de tension continue proportionelle à la fréquence d'entrée. Ce signal de tension est ensuite transmis à un régulateur 37, du type proportionnel intégrateur et dérivateur qui, après comparaison avec un signal de référence agit, selon la position d'un curseur 38 solidarisé à l'accélérateur du poste de conduite et coulissant le long d'une résistance 39 dite résistance d'accélérateur, sur le courant parcourant une bobine d'excitation 40 de l'excitatrice par l'intermédiaire d'un amplificateur d'excitation 41 monté en modulation de largeur d'impulsions. Des tensions différentes peuvent être appliquées à une borne, repérée en 42, selon qu'une autre résistance 43 est insérée ou non dans la branche de circuit reliant le régulateur 37 à la résistance d'accélérateur 39 par la fermeture ou l'ouverture d'un contacteur 44 commandé par relais.

Ce premier module de régulation agit de la manière suivante. Supposons que le conducteur pilote le véhicule chenillé en terrain plat en appuyant à fond sur l'accélérateur et que le véhicule progresse à sa vitesse maximum stabilisée. Lorsque le véhicule chenillé aborde une rampe de fort pourcentage et que le conducteur maintient l'accélérateur enfoncé au maximum, il y a un brusque accroissement de puissance demandée aux moteurs électriques qui se traduit par une demande de puissance supplémentaire à l'alternateur répercutée elle-même sur le moteur thermique. Sans l'intervention du premier module de régulation, cette demande de puissance, que le moteur thermique est incapable de satisfaire, va entraîner le ralentissement de celui-ci. Comme à une vitesse plus basse du moteur thermique correspond un couple moteur plus faible, le moteur thermique va ralentir davantage et finalement caler. Le rôle du dispositif de régulation est d'intervenir, dès que le capteur tachymétrique 35 mesure une réduction de la vitesse de rotation du moteur thermique 31, pour réduire le courant circulant dans la bobine d'excitation 40, ultérieurement appelé le courant d'excitation, de l'excitatrice 33 et par conséquent réduire le courant fourni aux moteurs électriques.

Le convertisseur 36 fournit un signal de tension plus basse au régulateur 37 qui, après comparaison avec la tension de référence et en tenant compte de la position du curseur 38 de l'accélérateur diminue à son tour la tension de commande de l'amplificateur d'excitation 41 qui réduira la valeur moyenne du courant d'excita tion. L'alternateur 32 fournit alors une tension moindre aux moteurs électriques qui vont ralentir, diminuant ainsi la vitesse du véhicule chenillé. L'intervention du premier module de régulation a donc empêché le calage du moteur thermique tout en permettant au véhicule chenillé de gravir la rampe à la vitesse maximum avec la puissance de son moteur thermique.

Poursuivons l'exemple en supposant que le véhicule chenillé arrive au sommet de la rampe et retrouve un terrain plat. Dès que le capteur tachymétrique 35 mesure une augmentation de la vitesse de rotation du moteur thermique, le convertisseur 36 donne un signal de tension plus élevée au régulateur 37 qui augmente la tension de commande de l'amplificateur d'excitation 41 qui augmente la valeur moyenne du courant d'excitation pour augmenter la tension de l'alternateur 32 et accroître la puissance électrique fournie aux moteurs qui vont accélérer et donner au véhicule chenillé une vitesse adaptée au degré d'enfoncement de l'accélérateur. D'une manière générale, l'intervention du dispositif de régulation permet au véhicule chenillé de disposer à tout instant de la puissance maximum en conservant au moteur thermique une vitesse pratiquement constante. Des allures plus réduites du véhicule chenillé sont obtenues pour des degrés d'enfoncement moindre de l'accélérateur tout en maintenant le moteur thermique à une vitesse de rotation supérieure ou égale à la vitesse correspondant à sa puissance maximum.

Selon une forme d'exécution avantageuse, le dispositif de régulation comporte également d'autres éléments qui assurent respectivement, en fonction de la vitesse du véhicule, l'assistance en virage, l'insertion d'une réistance de dérivation aux bornes de l'enroulement d'excitation des moteurs électriques pour disposer d'une plus grande vitesse du véhicule, la protection en survitesse, la surexcitation de l'alternateur au démarrage, et l'autorisa tion du changement des rapports de vitesse du réducteur, ainsi que des protections diverses.

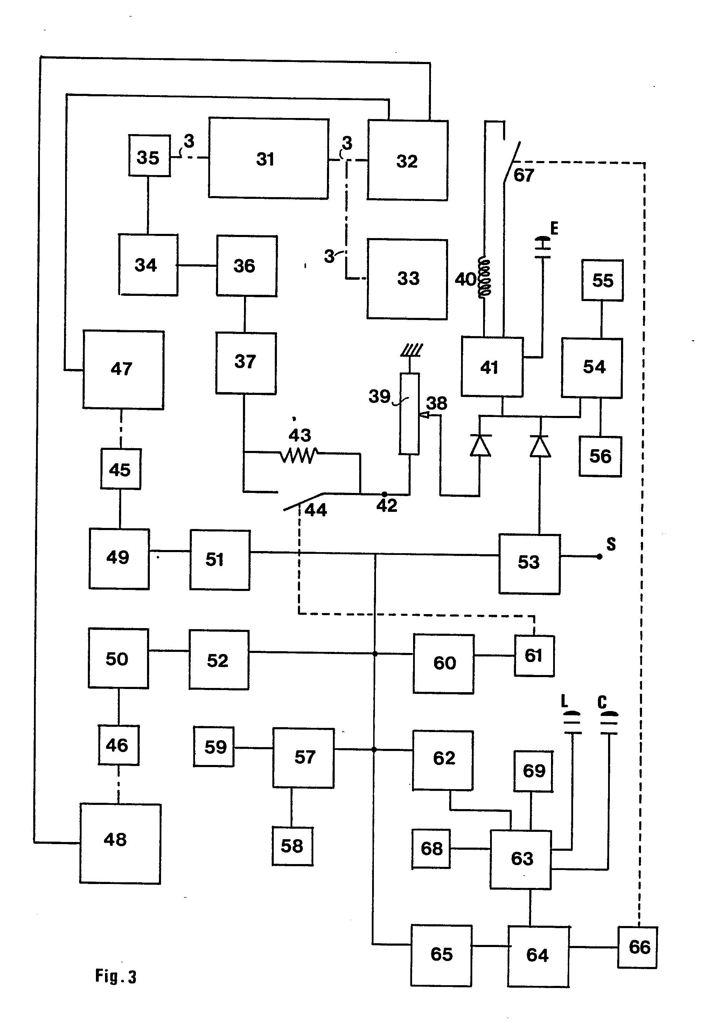

La figure 3 montre un dispositif de régulation comprenant des capteurs de vitesse 45 et 46 placés en bout d'arbre des moteurs électriques 47 et 48 et raccordés à des circuits de mise en forme 49 et 50 dont les signaux sont transmis à des convertisseurs fréquence/tension représentés en 51 et 52.

Les signaux délivrés par les convertisseurs 51 et 52 sont des signaux de tension continue et proportionnelle à la fréquence d'entrée, ils sont réglables à l'aide de potentiomètres et leur combinaison fournit donc une image de la vitesse du moteur électrique le plus rapide ou de la vitesse moyenne des 2 moteurs, c'est-à-dire la vitesse du véhicule.

Dès que le conducteur actionne l'un des sticks de direction représenté en S et pour autant que la vitesse du véhicule soit supérieure à un certain seuil, le dispositif d'assistance en virage 53 impose une tension de commande minimum à l'amplificateur d'excitation 41 qui tiendra également compte du degré d'enfoncement de la pédale d'accélérateur. Si par exemple le véhicule chenillé doit virer en descente alors que le conducteur n'appuie pas sur l'accélérateur, l'amplificateur d'excitation 41 assurera un seuil prédéterminé minimum pour le courant d'excitation, dès que le stick de direction est actionné.

Simultanément, celui-ci fournit un signal à l'élément de mise en court-circuit 54 pour court-circuiter l'inducteur du moteur situé du côté où l'on veut virer.

Si par exemple le conducteur veut virer à droite, en actionnant le stick droit il commande le contacteur court-circuitant l'inducteur du moteur électrique droit 48 à l'aide du relais 56. Par cette manoeuvre, le moteur électrique droit n'a plus de flux, il ne développe plus de couple moteur ni de force contre électromotrice de sorte que le moteur électrique gauche 49 rejoint un cou rant plus grand et fournit un couple moteur plus élevé.

Le déplacement du stick de direction sera d'autant plus grand que le conducteur voudra virer "serré". Dès le début, le dispositif d'assistance en virage 53 entre en action et suffit à lui seul pour un virage d'assez grand rayon, par contre pour un virage de faible rayon le stick tiré à fond enclenche un frein mécanique du côté concerné.

Comme signalé précédemment, le dispositif de régulation comporte également une commande de shuntage 57 des inducteurs des moteurs électriques 47 et 48. Cette commande du shuntage 57 intervient lorsque la vitesse de rotation des moteurs électriques 47 et 48 atteint un certain seuil de vitesse. Les convertisseurs 51 et 52 délivrent un signal de tension proportionnel à la vitesse de rotation des moteurs électriques 47 et 48 à la commande du shuntage 57 qui, après comparaison avec une tension de référence, enclenche des relais 58 et 59 qui actionnent des commutateurs pour insérer des résistances au parallèle sur les inducteurs des moteurs électriques. Ces résistances dérivent une partie du courant inducteur; elles réduisent ainsi le flux permettant au moteur électrique d'augmenter la vitesse.

Le dispositif de régulation comporte encore un circuit de surexcitation au démarrage 60 qui fonctionne lorsque la vitesse de rotation des moteurs électriques est faible, voire même nulle. Selon la valeur du signal reçu des convertisseurs 51 et 52 et après comparaison avec une tenison de référence le circuit de surexcitation 60 commande un relais 61 qui ferme le commutateur 44 pour court-circuiter la résistance 43 placée en série avec la résistance d'accélérateur 39 de manière à mettre la pleine tension à la borne 42. À basse vitesse ou au démarrage, lorsque le conducteur appuie à fond sur l'accélérateur, la position du curseur 38 est telle que le signal de tension envoyé à l'amplificateur d'excitation 41 est maximum. De ce fait, l'amplificateur d'excitation 41 envoie à son tour des implusions modulées en largeur de valeur maximum et contribue ainsi à fournir à l'enroulement d'excitation 40 de l'excitatrice 33 un courant maximum pour que le véhicule dispose d'un couple moteur élevé et de fortes accélérations mettant ainsi à profit l'avantage de la transmission électrique dégagée des temps morts consécutifs aux changements de vitesse dans les véhicules chenillés traditionnels.

Il faut cependant noter que, si la pleine excitation de l'alternateur est favorable dans la première période de la phase d'accélération, elle ne peut être maintenue constamment sans peine d'endommager les enroulements rotoriques de l'alternateur 32.

Le dispositif de régulation comporte encore un circuit de commutation composé d'un élément d'autorisation de commutation 62, d'un élément de commande de commutation 63 et d'un élément d'enclenchement 64. Ce circuit de commutation commande la séquence du changement du rapport de vitesse du réducteur de vitesse à l'aide d'électrovannes 68 et 69. Au démarrage, le rapport court du réducteur de vitesse est systématiquement engagé. Lorsque le conducteur du véhicule commande le passage du rapport de vitesse long du réducteur de vitesse, le circuit de commutation coupe d'abord l'excitation de l'excitatrice 33, il désexcite ensuite une première électrovanne 68 pour désengager le rapport de vitesse long. Ces diverses opérations sont effectuées de la façon suivante. Dès que le conducteur presse le bouton poussoir, repéré en L sur la figure 3, pour engager le rapport de vitese long du réducteur de vitesse, l'élément à commande 63 et l'élément d'enclenchement 69 reçoivent chacun un signal analysé par l'élément d'autorisation de commutation 62 avant que l'ordre ne soit exécuté.

Cet ordre ne sera effectivement exécuté que si la vitesse de rotation des moteurs électriques 47 et 48 se trouve dans une plage de vitesse déterminée donc pour une plage limitée de tension fournie par les convertisseurs 51 et 52. Si l'ordre est autorisé, l'élément d'enclenchement 64 commande un relais 66 qui ouvre un contacteur 67 pour couper l'alimentation de la bobine d'excitation 40. Après un premier délai de temporisation déterminé, l'élément de commande 63 commande d'abord la désexcitation de l'électrovanne 68 du rapport court puis, après un second délai de temporisation, commande l'excitation de l'électrovanne 69 du rapport long.

Pour la commande inverse, le passage du rapport long au rapport court du réducteur de vitesse ne sera autorisé que si la vitesse du véhicule ne dépasse pas un certain seuil déterminé. Lorsque le conducteur appuie sur le bouton poussoir, repéré en C sur la figure 3, pour engager le rapport de vitesse court du réducteur de vitesse, l'élément de commande 63 et l'élément d'enclenchement 64 reçoivent chacun un signal selon le processus préalablement exposé. L'ordre ne sera exécuté que si les convertisseurs 51 et 52 délivrent un signal de tension correspondant à une réduction suffisante de la vitesse de rotation des moteurs électriques 47 et 48 suite à la coupure de l'excitation de l'excitatrice 33. L'élément de commande 63 commande alors la désexcitation de l'électrovanne 69 du rapport long, puis après une temporisation de durée déterminée, l'enclenchement du rapport court par l'excitation de l'électrovanne 68.

Le dispositif de régulation comprend encore un circuit de protection qui coupe l'excitation de l'excitatrice 33 lorsqu'une survitesse de rotation d'un moteur électrique est détectée. Lorsque la vitesse de rotation d'un moteur électrique 47 ou 48 dépasse un seuil de vitesse déterminé, l'élément de protection 65 reçoit un signal de tension du convertisseur 51 ou 52 appartenant à la branche du moteur en survitesse. Après comparaison avec une tension de référence, l'élément de protection 65 transmet l'ordre à l'élément d'enclenchement 64 pour que l'excitation de l'excitatrice soit coupée à l'aide du contacteur 67 commandé par le relais 66. Dès que la vitesse de rotation du moteur considéré est retombée en dessous d'un certain seuil, le courant d'excitation est rétabli.

Enfin, le dispositif de régulation peut encore commander un groupe de propulsion amphibie, constitué de deux moteurs asynchrones triphasés munis d'hélices 19. Ces moteurs asynchrones servent à propulser le véhicule chenillé lorsqu'il évolue dans l'eau. Pour utiliser ces moteurs asynchrones, le conducteur enclenche un bouton poussoir, désigné en E à la figure 3, qui agit sur l'amplificateur d'excitation 41 pour limiter le courant dans la bobine d'excitation 40 de l'excitatrice 33 de manière à réduire la puissance électrique fournie par l'alternateur 31.

**Revendications**

1. Dispositif de régulation adaptable à un véhicule à transmission électrique comportant un groupe électrogène (30) éventuellement piloté par une excitatrice (33) et des moteurs électriques qui actionnent par l'intermédiaire de réducteurs de vitesse des roues ou barbotins entraînant des chenilles, caractérisé en ce qu'il comporte au moins un organe (35) pour la mesure de la vitesse de rotation du moteur thermique (31), des circuits (34,36) transformant le signal provenant dudit organe pour la mesure de la vitesse de rotation du moteur thermique en un signal proportionnel, et un circuit comparateur (37) qui compare ledit signal à un signal de référence et agit, en fonction de la position de l'accélérateur du poste de conduite (36), sur l'excitation (33) de la génératrice (32).

2. Dispositif selon la revendication 1 caractérisé en ce que l'organe de mesure de la vitesse de rotation du moteur thermique (31) est un capteur tachymétrique (35) fournissant des impulsions.

3. Dispositif selon la revendication 1 ou 2 caractérisé en ce que les circuits (34,36) transformant le signal provenant du capteur tachymétrique (35) consistent en un circuit de mise en forme (34) qui transforme le signal reçu en un signal sinusoïdal, et en un convertisseur (36) qui transforme le signal sinusoïdal en un signal de tension continue proportionnelle à la fréquence d'entrée.

4. Dispositif selon la revendication 3 caractérisé en ce que le circuit comparateur (37) consiste en un régulateur du type proportionnel intégrateur et dérivateur permettant la comparaison à un signal de référence.

5. Dispositif selon l'une quelconque des revendications précédentes caractérisé en ce que le circuit comparateur (37) est relié, via une résistance à curseur dite résistance d'accélérateur (39) et par l'intermédiaire d'un amplificateur (40) sur le courant d'excitation d'une excitatrice (33) de la génératrice (32), qui est montée sur le même arbre (3) que celle-ci.

6. Dispositif selon la revendication 5 caractérisé en ce qu'il comporte, entre le circuit comparateur (37) et l'amplificateur (40), une résistance enclenchable et déclenchable (43).

7. Dispositif selon l'une quelconque des revendications précédentes caractérisé en ce qu'il comporte un module pour l'assistance en virage qui comporte des capteurs de vitesse (45,46) placés en bout d'arbre des moteurs électriques d'entraînement gauche (47) et droit (48), et des circuits (49,51;50,52) de transformation des signaux provenant de chaque capteur de vitesse (45;46), qui sont reliés à un circuit (53) en liaison avec l'excitation (40) de la génératrice (32) et court-circuite l'inducteur du moteur voulu (47,48) et/ou freine celui-ci par l'intermédiaire d'organes de commande adéquats 54,55,56).

8. Dispositif selon l'une quelconque des revendications précédentes caractérisé en ce qu'il comporte un module qui commande l'insertion d'une résistance de dérivation sur les inducteurs des moteurs d'entraînement (47,48) via des relais, ledit module comportant un circuit comparateur (57) du signal provenant des capteurs de vitesse (45,46) desdits moteurs à un signal de référence.

9. Dispositif selon l'une quelconque des revendications précédentes caractérisé en ce qu'il comporte un module de surexcitation (60,61) commandant l'enclenchement (44) et le déclenchement de la résistance de dérivation (43) entre le circuit comparateur (37) et l'amplificateur (40) du courant d'excitation de la génératrice, via un relais (61), en fonction du signal provenant des capteurs de vitesse (45,51;46,52) montés sur les moteurs d'entraînement (47,48).

10. Dispositif selon l'une quelconque des revendications précédentes caractérisé en ce qu'il comporte un module de commutation de la séquence de changement du rapport de vitesse des réducteurs associés aux moteurs électriques d'entraînement (47,48), qui comporte une porte (62) autorisant le commutation ordonnée par le conducteur (L,C) en fonction de la vitesse (45,51;46,52) des moteurs d'entraînement (47,48), un élément (63) commandant via des électrovannes (68,69) ladite commutation et un élément (64) commandant (67) l'enclenchement et le déclenchement de l'excitation de la génératrice via un relais (66).

11. Dispositif selon l'une quelconque des revendications précédentes caractérisé en ce qu'il comporte encore un module de protection comportant un comparateur de la vitesse de rotation (45,51;46,52) des moteurs électriques (65) d'entraînement (47,48) à une valeur de référence et un circuit de commande (64), en fonction de ces vitesses, de l'interruption (67) de l'excitation (40), via un relais (66).

12. Véhicule à transmission électrique équipé d'un dispositif de commande selon l'une quelconque des revendications précédentes.

Fig. 1

Fig.2

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| X | GB-A-1 083 722  (CATERPILLAR TRACTOR)<br>* page 2, ligne 63 - page 3, ligne 119; page 4, ligne 107 - page 5, ligne 103; page 6, lignes 30-43; figures 1, 2 * | 1 | B 60 L  11/04<br>B 60 K  41/08<br>B 62 D  11/04 |
| A | | 3,5,6, 9,11 | |
| | --- | | |
| X | EP-A-0 047 499  (STILL)<br>* page 3, ligne 19 - page 5, ligne 11; page 14, ligne 28 - page 16, ligne 25; figure 1 * | 1 | |
| A | | 3,4,8 | |
| | | | **DOMAINES TECHNIQUES RECHERCHES (Int. Cl. 4)** |
| | --- | | |
| A | US-A-2 962 642  (BRANE)<br>* colonne 1, lignes 15-27; colonne 2, ligne 30 - colonne 3, ligne 74; colonne 5, lignes 5-56; revendications 1, 2; figure 1 * | 7 | B 60 L  11/00<br>B 60 K  17/00<br>B 60 K   9/00<br>B 60 K  41/00<br>B 60 L  15/00 |
| A | DD-A-  47 400  (FÖRSTE)<br>* en entier * | 7 | |
| | ---          -/- | | |

Le présent rapport de recherche a été établi pour toutes les revendications

| Lieu de la recherche | Date d'achèvement de la recherche | Examinateur |
|---|---|---|
| BERLIN | 03-07-1987 | BEITNER M.J.J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 021 877 (CITROEN) <br> * abrégé; page 3, ligne 26 - page 4, ligne 6; page 4, lignes 20-31; page 6, lignes 5-17; figure 1 * | 10 | |
| A | US-A-3 898 893 (HASHIMOTO et al.) <br> * colonne 1, lignes 5-35, 60 - colonne 2, ligne 31; colonne 4, lignes 39-59; revendication 1; figures 1, 3 * | 10 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| BERLIN | 03-07-1987 | BEITNER M.J.J.B. |